# EUROPEAN PATENT APPLICATION

(11) **EP 4 440 226 A1**
(43) Date of publication of application: **02.10.2024**
(21) Application number: 22898324.3
(22) Date of filing: 28.10.2022
(51) Int. Cl.: H04W 72/566, H04W 4/40, H04W 72/12, H04W 72/232, H04W 72/40, H04W 92/18

(54) **COMMUNICATION DEVICE AND COMMUNICATION METHOD**

(30) Priority: 26.11.2021 JP 2021192574
(71) Applicant: Sony Group Corporation, Tokyo 108-0075 (JP)
(72) Inventor: SHIMEZAWA, Kazuyuki, Tokyo 108-0075 (JP); KUSASHIMA, Naoki, Tokyo 108-0075 (JP); SUGAI, Ren, Tokyo 108-0075 (JP); OTSUKI, Hiroto, Tokyo 108-0075 (JP)
(74) Representative: Witte, Weller & Partner Patentanwälte mbB
(86) International application number: PCT/JP2022/040279
(87) International publication number: WO 2023/095539

(57) **Abstract**

A communication device (200A) includes a communication unit (220) and a control unit (240) . The communication unit (220) receives, from a base station (100), scheduling information related to a sidelink resource used for sidelink communication with another communication device. The control unit (240) performs the sidelink communication with another communication device by using the sidelink resource. In a case where receiving cancellation information for canceling the use of the sidelink resource, the control unit (240) cancels the sidelink communication using the sidelink resource based on the cancellation information.

## Description

### Field

The present disclosure relates to a communication device and a communication method.

### Background

In the 3rd generation partnership project (3GPP (registered trademark)), device-to-device (D2D) communication for performing direct communication between terminals (UEs) is standardized as sidelink communication in each of 4G long term evolution (LTE) and 5G new radio (NR). In the sidelink communication, vehicle-to-everything (V2X) communication is one of the main use cases. As V2X communication, vehicle-to-vehicle (V2V), vehicle-to-infrastructure (V2I), vehicle-to-pedestrian (V2P), and vehicle-to-network (V2N) are assumed.

In particular, as specific use cases for V2X communication in 5G NR, platooning, advanced driving, extended sensor, and remote driving are being considered. In addition, as requirements for ultra reliable and low latency communications (URLLC) in V2X communication, standards are being developed so as to enable latency of 10 milliseconds or less and reliability of 99.999%.

Further, the sidelink communication is not limited to V2X communication, and can be used in various use cases. For example, automation factory is one of the use cases for utilizing the sidelink communication. In such a factory, a large number of devices such as sensors and cameras are installed and direct communication therebetween is under consideration.

### Citation List

### Non Patent Literature

Non Patent Literature 1: "3GPP TS22.186 version 16.2.0 Release 16", [online], [Searched on November 22, 2021], on the Internet <https://www.3gpp.org/ftp//Specs/archive/22_series/22.186/2 2186-g20.zip>
Non Patent Literature 2: "3GPP TS22.104 version 17.4.0 Release 17", [online], [Searched on November 22, 2021], on the Internet <https://www.3gpp.org/ftp//Specs/archive/22_series/22.104/2 2104-h40.zip>

### Summary

### Technical Problem

As described above, although inter-vehicle communication has been examined in V2X communication thus far, intra-vehicle communication can be proposed as technological enhancement in the future sidelink communication. In the intra-vehicle communication, for example, sensors and camera modules that were previously connected to each other by wire can be connected to each other by wireless communication as wireless communication devices. In particular, it is expected that the number of devices such as the sensors and camera modules will rapidly increase as autonomous driving and the like becomes available in the future. Therefore, there will be an increasing demand for connecting such sensors and camera modules to each other by wireless communication.

Here, considering autonomous driving, controlling a vehicle basically based on data acquired from a sensor or a camera in the vehicle is important, and information obtained in the inter-vehicle communication (that is, the previous V2X communication) is utilized as auxiliary information. The intra-vehicle communication is therefore required to have further lower latency than the conventional inter-vehicle communication.

Further, in the automation factory also, particularly in a case where production lines are frequently changed according to what is to be manufactured, further lower latency is required.

As described above, further lower latency is required in the sidelink communication.

Therefore, the present disclosure provides a mechanism which enables sidelink communication with lower latency.

Note that the above problem or object is merely one of a plurality of problems or objects that can be solved or achieved by a plurality of embodiments disclosed in the present specification.

### Solution to Problem

According to the present disclosure, a communication device is provided. The communication device includes a communication unit and a control unit. The communication unit receives, from a base station, scheduling information related to a sidelink resource used for sidelink communication with another communication device. The control unit performs the sidelink communication with another communication device by using the sidelink resource. In a case where receiving cancellation information for canceling the use of the sidelink resource, the control unit cancels the sidelink communication using the sidelink resource based on the cancellation information.

### Brief Description of Drawings

FIG. 1 is a diagram illustrating an example of base station-initiated sidelink communication.
FIG. 2 is a diagram illustrating an example of SL communication according to an embodiment of the present disclosure.
FIG. 3 is a diagram illustrating an example of a schematic configuration of a communication system according to an embodiment of the present disclosure.
FIG. 4 is a block diagram illustrating an example of the configuration of a base station according to an embodiment of the present disclosure.
FIG. 5 is a block diagram illustrating an example of the configuration of a terminal device according to an embodiment of the present disclosure.
FIG. 6 is a diagram illustrating an example of signaling performed in a communication system according to an embodiment of the present disclosure.
FIG. 7 is a diagram illustrating another example of signaling performed in a communication system according to an embodiment of the present disclosure.
FIG. 8 is a diagram illustrating another example of signaling performed in a communication system according to an embodiment of the present disclosure.
FIG. 9 is a diagram illustrating an example of signaling performed in a communication system according to an embodiment of the present disclosure.
FIG. 10 is a diagram illustrating an example of signaling performed in a communication system according to an embodiment of the present disclosure.
FIG. 11 is a diagram illustrating an example of signaling performed in a communication system according to an embodiment of the present disclosure.
FIG. 12 is a diagram illustrating an example of signaling performed in a communication system according to an embodiment of the present disclosure.

### Description of Embodiments

Hereinafter, embodiments of the present disclosure will be described in detail with reference to the appended drawings. Note that, in the specification and the appended drawings, structural elements that have substantially the same function and structure are denoted with the same reference numerals, and repeated explanation of these structural elements is omitted.

Further, in the specification and the drawings, similar constituent elements in the embodiments are sometimes distinguished by adding different alphabets or numerals after the same reference numerals. However, in a case where it is not necessary to particularly distinguish the similar constituent elements from one another, only the same reference numerals are given.

One or more embodiments (including examples and modifications) described below can each be implemented independently. On the other hand, at least some of the plurality of embodiments described below may be appropriately combined with at least some of other embodiments. The plurality of embodiments may include novel features different from each other. Therefore, the plurality of embodiments can contribute to solving different objects or problems, and can exhibit different effects.

### «1. Introduction»

### <1.1. Base station-initiated sidelink communication>

In conventional sidelink (SL) communication, two modes (Mode-1 and Mode-2) are defined as a method of scheduling SL resources (SL resource allocation mode) used for transmission of a physical sidelink control channel (PSCCH) and/or a physical sidelink shared channel (PSSCH).

Mode-1 is base station-initiated sidelink communication. In Mode-1, a base station determines an SL resource to notify a TxUE, which is a UE for SL transmission, of scheduling information (SL grant) for the determined SL resource via physical downlink control channel (PDCCH). The TxUE performs SL communication based on the received SL grant.

Mode-2 is UE-initiated sidelink communication. In Mode-2, the TxUE determines an SL resource from a resource pool according to a predetermined method, and performs SL communication. The resource pool is set from the base station or in advance.

Examples of the predetermined method of determining an SL resource include a method of monitoring (sensing) an SL resource to be used for SL communication in the future. In this case, the TxUE monitors the SL resource to be used for SL communication in the future by receiving PSCCH from another UE and/or measuring a reference signal received power (RSRP) of candidate SL resources.

### <1.2. Problem>

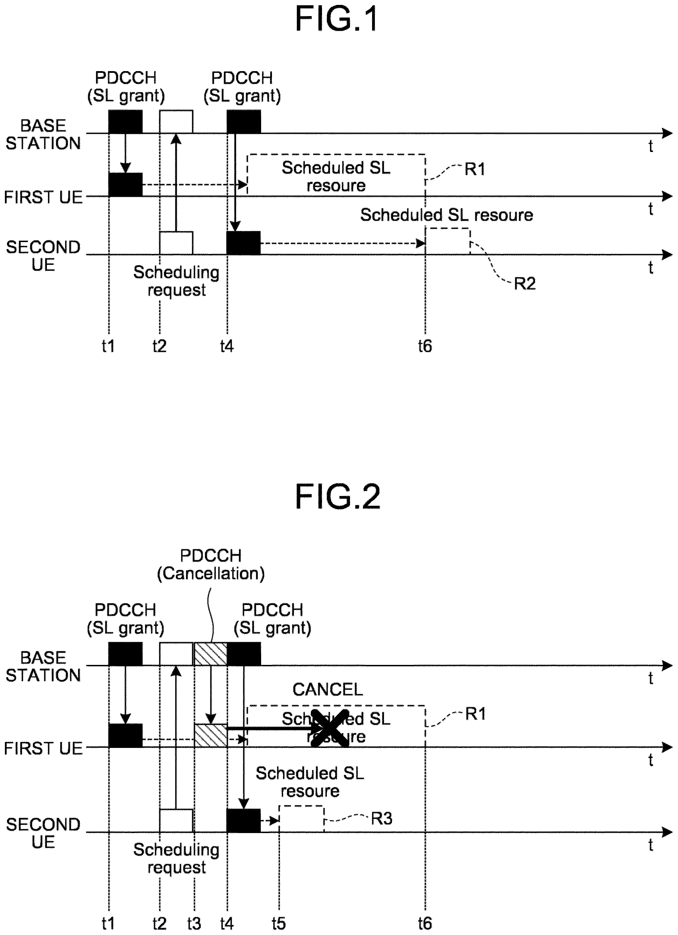

FIG. 1 is a diagram illustrating an example of the base station-initiated sidelink communication. In SL communication illustrated in FIG. 1, it is assumed that a first UE performs SL communication as the TxUE according to an instruction from a base station. Further, in the SL communication illustrated in FIG. 1, it is assumed that a second UE having higher priority than the first UE performs SL communication as the TxUE according to an instruction from the base station. Note that, unless otherwise specified, hereinafter, the priority means priority in terms of URLLC (in particular, transmission delay).

To be specific, it is assumed that the (low priority) first UE having low priority and the (high priority) second UE having high priority perform the SL communication in Mode-1 using the same resource pool.

As illustrated in FIG. 1, at time t1, the base station transmits, as an SL grant, scheduling information (DCI) for a predetermined SL resource R1 to the first UE. The first UE that has received the SL grant from the base station transmits, based on the SL grant, a signal to another UE (RxUE, not illustrated) using the SL resource R1 scheduled by the base station.

It is assumed that the second UE transmits a scheduling request to the base station at time t2 because data having higher priority than that of the first UE is generated in the second UE. In this case, in conventional SL communication, the second UE cannot use the SL resource R1 that has been already scheduled for the first UE.

However, in a case where another frequency domain in the resource pool is unoccupied, the second UE can perform SL communication by using that another frequency domain. However, in the present embodiment, the following description will be made assuming that another frequency domain is occupied.

At time t4, the base station transmits, as an SL grant, scheduling information (DCI) for a predetermined SL resource R2 to the second UE. The second UE that has received the SL grant from the base station transmits, based on the SL grant, a signal to another UE (RxUE) using the SL resource R2.

The SL resource R2 is a resource scheduled after the SL resource R1. Therefore, a transmission delay occurs corresponding to a period from when the second UE transmits the scheduling request to the base station at time t2 to when the second UE transmits the signal by using the SL resource R2 at time t6. Such a transmission delay is a problem particularly in a use case such as the automation factory described above.

Here, for example, in uplink communication from the UE to the base station, the UE performs UL transmission based on a UL grant from the base station. At this time, if UL transmission by another UE having high priority occurs, then the base station transmits control information for canceling the UL grant for the UE. As described above, in the uplink communication, the base station can cancel the UL grant. A method for canceling the UL grant in the uplink communication is disclosed in, for example, 3GPP TS 38.214 V16.7.0.

However, this method is the method for canceling uplink transmission, and the base station cannot cancel sidelink transmission by using this method.

Further, for example, in the SL communication in Mode-2 described above, the TxUE can transmit reservation information for reserving a future SL resource via PSCCH. Another TxUE monitors (senses) all or some of the PSCCHs to grasp the usage status of the SL resource, and selects an unoccupied resource to perform SL communication.

The TxUE in which SL transmission with high priority occurs preempts the SL resource that another TxUE has already reserved. The TxUE performs the SL transmission with high priority using the SL resource preempted from that another TxUE.

The TxUE from which the SL resource is preempted monitors control information (PSCCH) from the TxUE that preempts the SL resource to thereby recognize that the SL resource has been preempted, and cancels the SL transmission by the TxUE from which the SL resource is preempted. The method of preemption is disclosed, for example, in 3GPP TS 38.213 V16.7.0.

However, this method is effective in the SL communication in Mode-2, and cannot be used in the SL communication in Mode-1 that is assumed in the present disclosure. Further, the TxUE performing the SL communication in Mode-1 does not monitor (sense) the PSCCH of another TxUE unlike the TxUE performing the SL communication in Mode-2. Therefore, the TxUE performing the SL communication in Mode-1 cannot perform the preemption in Mode-2.

As described above, in the conventional SL communication in Mode-1, there is no method of canceling an SL grant. Accordingly, even if SL transmission with high priority occurs, the TxUE cannot perform SL transmission with high priority until an SL resource is available. As described above, the conventional SL communication in Mode-1 has a problem that a transmission delay may occur.

### <1.3. Outline of proposed technology>

To address this, in the embodiment of the present disclosure, as a method for solving the problem described above, information for canceling a scheduled SL grant is transmitted to a first UE.

FIG. 2 is a diagram illustrating an example of SL communication according to the embodiment of the present disclosure. Note that description of SL communication similar to that in FIG. 1 will be omitted.

As illustrated in FIG. 2, a base station that has received a scheduling request from a second UE at time t2 transmits PDCCH (cancellation) for canceling an SL grant to the first UE at time t3. The cancellation is information for canceling the SL grant transmitted by the base station to the first UE at time t1. As a result, an SL resource R1 is canceled.

Next, at time t4, the base station transmits scheduling information (DCI) for a predetermined SL resource R3 to the second UE as an SL grant. Note that the SL resource R3 is an SL resource overlapping with at least a part of the SL resource R1 canceled based on the cancellation.

The second UE performs SL transmission with high priority by using the SL resource R3 at time t5 earlier than time t6 that is the end time of the SL resource R1.

As described above, the first UE (an example of a communication device) according to the embodiment of the present disclosure receives, from the base station, the scheduling information (for example, SL grant) related to a sidelink resource used for sidelink communication with another communication device (RxUE). The first UE performs sidelink with another communication device by using the sidelink resource. When receiving cancellation information (for example, cancellation) for canceling the use of the sidelink resource, the first UE cancels the sidelink communication using the sidelink resource based on the cancellation information.

Further, the base station (an example of the communication device) according to the embodiment of the present disclosure transmits cancellation information (for example, cancellation) to a second communication device (for example, the first UE or the RxUE) that performs SL communication with a first communication device (for example, the RxUE or the first UE) based on the scheduling information transmitted by the base station. The scheduling information is scheduling information related to the sidelink resource used by the second communication device for sidelink communication with the first communication device. The cancellation information is information for canceling the sidelink communication using the sidelink resource.

As a result, the second UE with high priority can perform SL transmission with high priority by using at least a part of the sidelink resource canceled based on the cancellation information. As a result, the second UE can further reduce the transmission delay of the SL transmission with high priority.

Here, the base station transmits the cancellation information, but the present invention is not limited thereto. Although details will be described later, for example, the second UE (an example of a third communication device) may transmit the cancellation information.

### <<2. Configuration of communication system>>

### <2.1. Overall configuration of communication system>

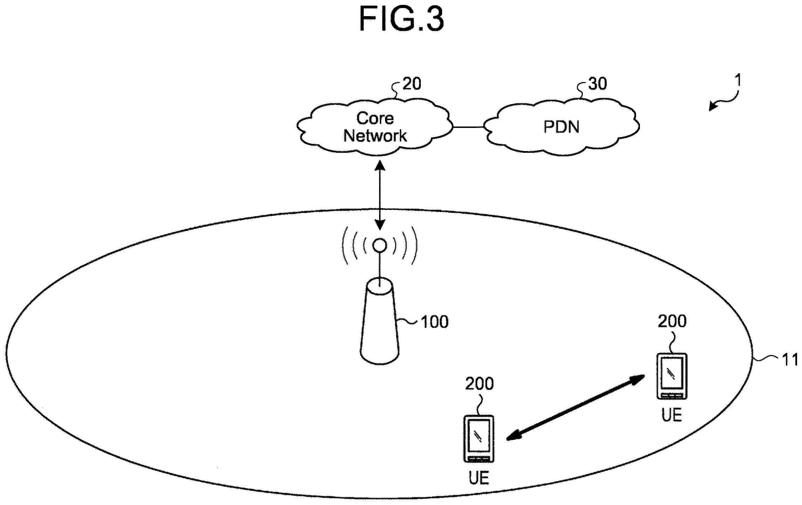

Next, an example of a schematic configuration of a communication system 1 to which the proposed technology is applied will be described with reference to FIG. 3. FIG. 3 is a diagram illustrating an example of the schematic configuration of the communication system 1 according to the embodiment of the present disclosure. As illustrated in FIG. 3, the communication system 1 includes a base station 100, terminal devices (UEs) 200, a core network 20, and a packet data network (PDN) 30.

Here, the communication system 1 may be a cellular communication system such as wideband code division multiple access (W-CDMA), code division multiple access 2000 (cdma2000), LTE, or NR. In the following description, "LTE" is assumed to include LTE-advanced (LTE-A), LTE-advanced pro (LTE-A Pro), and evolved universal terrestrial radio access (EUTRA). Further, "NR" is assumed to include a new radio access technology (NRAT) and a further EUTRA (FEUTRA).

NR is the next generation (fifth generation) of radio access technology (RAT) after LTE. NR is a radio access technology that can support various use cases including an enhanced mobile broadband (eMBB), massive machine type communications (mMTC), and ultra-reliable and low latency communications (URLLC).

Note that the communication system 1 is not limited to the cellular communication system. For example, the communication system 2 may be another radio communication system such as a wireless local area network (LAN) system, a television broadcasting system, an aeronautical radio system, or a space radio communication system.

The base station 100 is a communication device that operates a cell 11 to provide a radio service to one or more terminal devices 200 located within the coverage of the cell 11. The cell 11 can be operated according to any radio communication scheme such as LTE or NR. The base station 100 is connected to the core network 20. The core network 20 is connected to the PDN 30.

Note that the base station 100 may include a set of a plurality of physical or logical devices. For example, in the embodiment of the present disclosure, the base stations 100 may be separated into a plurality of devices of a baseband unit (BBU) and a radio unit (RU), and may be interpreted as a collection of the plurality of devices. Additionally or alternatively, in the embodiment of the present disclosure, the base station 100 may be either or both of the BBU and the RU. The BBU and the RU may be connected by a predetermined interface (for example, eCPRI). Additionally or alternatively, the RU may be referred to as a remote radio unit (RRU) or a radio DoT (RD). Additionally or alternatively, the RU may correspond to a gNB-DU described later. Additionally or alternatively, the BBU may correspond to a gNB-CU described later. Additionally or alternatively, the RU may be a device integrally formed with an antenna. The antenna (for example, antenna integrally formed with the RU) of the base station 100 may adopt an advanced antenna system and support MIMO (for example, FD-MIMO) or beamforming. In the advanced antenna system, the antenna (for example, antenna integrally formed with the RU) of the base station 100 may include, for example, 64 antenna ports for transmission and 64 antenna ports for reception.

Further, the plurality of base stations 100 may be connected to each other. The one or more base stations 100 may be included in a radio access network (RAN). That is, the base station 100 may be simply referred to as a RAN, a RAN node, an access network (AN), or an AN node. The RAN in LTE is referred to as an enhanced universal terrestrial RAN (EUTRAN). The RAN in NR is referred to as an NGRAN. The RAN in W-CDMA (UMTS) is referred to as a UTRAN. The base station 100 in LTE is referred to as an evolved node B (eNodeB) or an eNB. That is, the EUTRAN includes one or more eNodeBs (eNBs). Further, the base station 100 in NR is referred to as a gNodeB or a gNB. That is, the NGRAN includes one or more gNBs. Further, the EUTRAN may include a gNB (en-gNB) connected to a core network (EPC) in an LTE communication system (EPS). Similarly, the NGRAN may include an ng-eNB connected to a core network 5GC in a 5G communications system (5GS). Additionally or alternatively, in a case where the base station 100 is an eNB, a gNB, or the like, it may be referred to as 3GPP access. Additionally or alternatively, in a case where the base station 100 is a radio access point (access point), it may be referred to as Non-3GPP access. Additionally or alternatively, the base station 100 may be an optical extension device called a remote radio head (RRH). Additionally or alternatively, in a case where the base station 100 is a gNB, the base station 100 may be referred to as a combination of a gNB central unit (CU) and a gNB distributed unit (DU) or any one of them. The gNB central unit (CU) hosts a plurality of upper layers (for example, RRC, SDAP, and PDCP) of the access stratum for communication with the UE. On the other hand, the gNB-DU hosts a plurality of lower layers (for example, RLC, MAC, and PHY) of the access stratum. That is, among message and information to be described later, RRC signalling (for example, various SIBs including an MIB and an SIB1, an RRCSetup message, and an RRCReconfiguration message) may be generated by the gNB CU, while DCI and various physical channels (for example, PDCCH, and PBCH) to be described later may be generated by the gNB-DU. Alternatively, in the RRC signalling, for example, some configurations such as IE:cellGroupConfig may be generated by the gNB-DU, and the remaining configurations may be generated by the gNB-CU. These configurations may be transmitted and received via an F1 interface to be described later. The base station 100 may be configured to perform communication with another base station 100. For example, in a case where the plurality of base stations 100 is eNBs or a combination of an eNB and an en-gNB, the base stations 100 may be connected by an X2 interface. Additionally or alternatively, in a case where the plurality of base stations 100 is gNBs or a combination of a gn-eNB and a gNB, the base stations 100 may be connected by an Xn interface. Additionally or alternatively, in a case where the plurality of base stations 100 is a combination of a gNB central unit (CU) and a gNB distributed unit (DU), the base stations 100 may be connected by the F1 interface described above. Message and information (information on RRC signalling or DCI, physical channel) described later may be communicated (for example, via X2, Xn, F1 interface) between the plurality of base stations.

Further, as described above, the base station 100 may be configured to manage a plurality of cells. A cell provided by the base station 100 is called a serving cell. The serving cell includes a primary cell (PCell) and a secondary cell (SCell). In a case where dual connectivity (for example, EUTRA-EUTRA dual connectivity, EUTRA-NR dual connectivity (ENDC), EUTRA-NR dual connectivity with 5GC, NR-EUTRA dual connectivity (NEDC), and NR-NR dual connectivity) is provided to the UE (for example, terminal device 200), the PCell and zero or one or more SCell(s) provided by a master node (MN) are called a master cell group. Further, the serving cell may include a primary secondary cell or a primary SCG cell (PSCell). In other words, in a case where the dual connectivity is provided to the UE, the PSCell and zero or one or more SCell(s) provided by a secondary node (SN) are called a secondary cell group (SCG). Unless specially configured (for example, PUCCH on SCell), the physical uplink control channel (PUCCH) is transmitted in the PCell and the PSCell, but is not transmitted in the SCell. In addition, a radio link failure is also detected in the PCell and the PSCell, but is not detected in the SCell (is not required to be detected). Since the PCell and the PSCell have a special role in the serving cell(s) as described above, they are also referred to as special cells (SpCells). One downlink component carrier and one uplink component carrier may be correlated with one cell. Further, a system bandwidth corresponding to one cell may be divided into a plurality of bandwidth parts. In such a case, one or more bandwidth parts may be set in the UE, and one bandwidth part may be used for the UE as an active BWP. Further, radio resources that can be used by the terminal device 200 (for example, a frequency band, a numerology (subcarrier spacing), and a slot format (slot configuration)) may be different for each cell, each component carrier, or each BWP.

In a case where the core network 20 is an NR core network (5G Core (5GC)), the core network 20 may include an access and mobility management function (AMF), a session management function (SMF), a user plane function (UPF), a policy control function (PCF), and a unified data management (UDM).

In a case where the core network 20 is an LTE core network (evolved packet core (EPC)), the core network 20 may include a mobility management entity (MME), a serving gateway (S-GW), a PDN gateway (P-GW), a policy and charging rule function (PCRF), and a home subscriber server (HSS). The AMF and the MME are control nodes that handle control plane signals, and manage a mobility state (mobility) of the terminal device 200. The UPF and the S-GW/P-GW are nodes that handle user plane signals. The PCF/PCRF are control nodes that perform control related to a policy and billing such as quality of service (QoS) for a PDU session or a bearer. The UDM/HSS are control nodes that handle subscriber data and perform service control.

The terminal device 200 is a wireless communication device that performs wireless communication with other devices. The terminal device 200 is, for example, a sensor or a camera device having a communication function, a mobile phone, a smart device (smartphone or tablet terminal), a personal digital assistant (PDA), or a personal computer. The terminal device 200 may be a head mounted display, VR goggles, or the like that have a function of wirelessly transmitting and receiving data.

For example, the terminal device 200 wirelessly communicates with another terminal device 200 based on the control of the base station 100 or autonomously. In this case, the terminal device 200 transmits a sidelink signal to another terminal device 200 and receives a sidelink signal from another terminal device 200 in PC5 link. Hereinafter, the transmission and reception of the sidelink signal by the terminal device 200 will be collectively referred to as sidelink communication. When performing sidelink communication, the terminal device 200 may use an automatic retransmission technology such as hybrid automatic repeat request (HARQ).

The terminal device 200 may be configured to perform non-orthogonal multiple access (NOMA) communication with the base station 100. Note that the terminal device 200 may be configured to perform NOMA communication also in communication (sidelink) with another terminal device 200. Further, the terminal device 200 may be configured to perform low power wide area (LPWA) communication with other communication devices (for example, the base station 100 and another terminal device 200). In addition, the wireless communication used by the terminal device 200 may be wireless communication using a millimeter wave or a terahertz wave. Note that the wireless communication (including sidelink communication) used by the terminal device 200 may be radio communication using radio waves or wireless communication (optical wireless) using infrared rays or visible light.

### <2.2. Configuration of base station device>

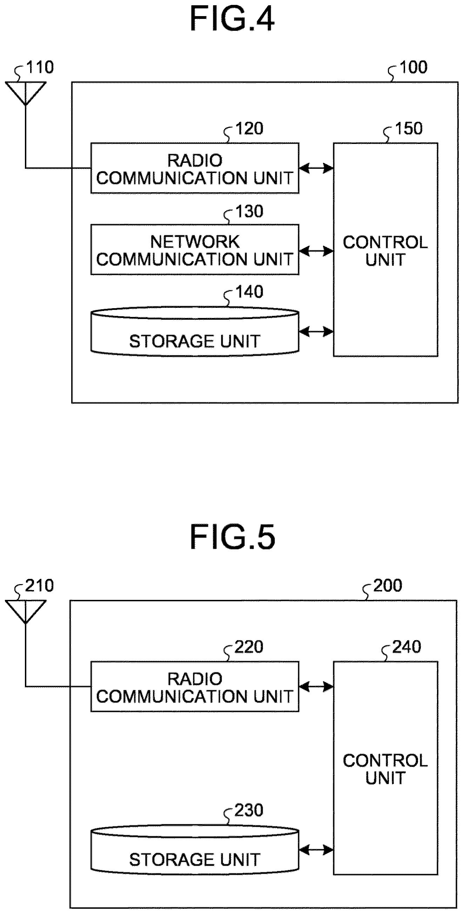

FIG. 4 is a block diagram illustrating an example of the configuration of the base station 100 according to the embodiment of the present disclosure. Referring to FIG. 4, the base station 100 includes an antenna unit 110, a radio communication unit 120, a network communication unit 130, a storage unit 140, and a control unit 150.

### (1) Antenna unit 110

The antenna unit 110 radiates a signal output by the radio communication unit 120 into space as a radio wave. Further, the antenna unit 110 converts a radio wave in space into a signal to output the signal to the radio communication unit 120. Note that the antenna unit 110 of the present embodiment includes a plurality of antenna elements and can form a beam.

### (2) Radio communication unit 120

The radio communication unit 120 transmits and receives signals. For example, the radio communication unit 120 transmits a downlink signal to the terminal device 200 and receives an uplink signal from the terminal device 200. The radio communication unit 120 operates under the control of the control unit 150. Note that the radio communication unit 120 of the present embodiment can form a plurality of beams with the antenna unit 110 and communicate with the terminal device 200.

### (3) Network communication unit 130

The network communication unit 130 transmits and receives information. For example, the network communication unit 130 transmits information to another node and receives information from another node. For example, the other node includes another base station 100 and a core network node. The network communication unit 130 communicates with another device under the control of the control unit 150.

### (4) Storage unit 140

The storage unit 140 temporarily or permanently stores programs and various data for the operation of the base station 100. The storage unit 140 functions as a storage means of the base station 100.

### (5) Control unit 150

The control unit 150 is a controller that controls the individual units of the base station 100. The control unit 150 is implemented by, for example, a processor such as a central processing unit (CPU) or a micro processing unit (MPU). For example, the control unit 150 is implemented in response to various programs, stored in the storage device of the base station 100, executed by the processor using a random access memory (RAM) or the like as a work area. Alternatively, the control unit 150 may be implemented, for example, by an integrated circuit such as an application specific integrated circuit (ASIC) or a field programmable gate array (FPGA). Each of the CPU, the MPU, the ASIC, and the FPGA can be regarded as the controller.

### <2.3. Configuration of terminal device>

FIG. 5 is a block diagram illustrating an example of the configuration of the terminal device 200 according to the embodiment of the present disclosure. Referring to FIG. 5, the terminal device 200 includes an antenna unit 210, a radio communication unit 220, a storage unit 230, and a control unit 240.

### (1) Antenna unit 210

The antenna unit 210 radiates a signal output by the radio communication unit 220 into space as a radio wave. Further, the antenna unit 210 converts a radio wave in space into a signal to output the signal to the radio communication unit 220. Note that the antenna unit 210 of the present embodiment includes a plurality of antenna elements and can form a beam.

### (2) Radio communication unit 220

The radio communication unit 220 transmits and receives signals. For example, the radio communication unit 220 receives a downlink signal from the base station 100 and transmits an uplink signal to the base station 100. The radio communication unit 220 operates under the control of the control unit 240. Note that the radio communication unit 220 of the present embodiment can form a plurality of beams with the antenna unit 210 and communicate with the base station 100.

### (3) Storage unit 230

The storage unit 230 temporarily or permanently stores programs and various data for the operation of the terminal device 200. The storage unit 230 functions as a storage means of the terminal device 200.

### (4) Control unit 240

The control unit 240 is a controller that controls the individual units of the terminal device 200. The control unit 240 is implemented by, for example, a processor such as a CPU or an MPU. For example, the control unit 240 is implemented in response to various programs, stored in the storage device of the terminal device 200, executed by the processor using a RAM or the like as a work area. The control unit 240 may be implemented by, for example, an integrated circuit such as an ASIC or an FPGA. Each of the CPU, the MPU, the ASIC, and the FPGA can be regarded as the controller.

### <<3. Notification method of SL cancellation information>>

### <3.1. Method of notification by base station>

### <3.1.1. Notification method 1 by base station>

Next, an example of a method of notifying SL cancellation information performed in the communication system 1 according to the embodiment of the present disclosure will be described. Here, it is assumed that the base station 100 transmits SL cancellation information to the first UE (hereinafter, referred to as a first UE 200A) separately. The second UE is also referred to as a second UE 200B.

### [Signaling]

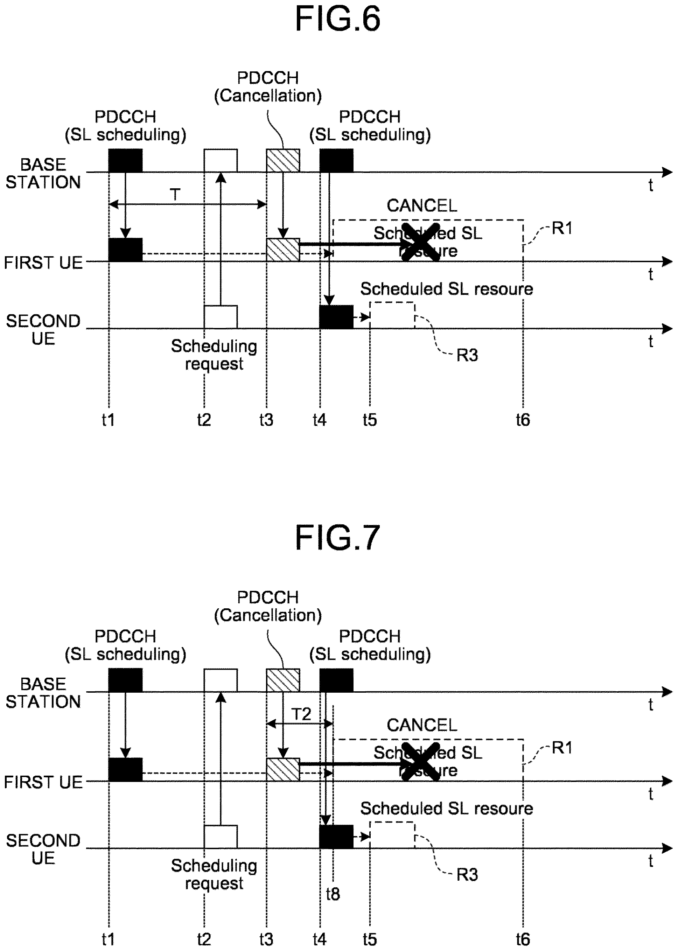

FIG. 6 is a diagram illustrating an example of signaling performed in the communication system 1 according to the embodiment of the present disclosure. Note that, as described above, the first UE 200A is a terminal device that performs SL communication with low priority, and the second UE 200B is a terminal device that performs SL communication with higher priority than the first UE 200A. Here, it is assumed that both the first UE 200A and the second UE 200B use an identical resource pool to perform the SL communication in Mode-1.

As illustrated in FIG. 6, at time t1, the base station 100 transmits PDCCH for SL scheduling to the first UE 200A. A predetermined SL resource R1 is allocated (scheduled) based on DCI included in the PDCCH.

Note that FIG. 6 illustrates a case where the SL resource R1 for the first UE 200A is dynamically allocated (namely, dynamic grant) via the PDCCH, but the present invention is not limited thereto. The notification method illustrated in FIG. 6 is also applicable to, for example, a case where a plurality of periodic SL resources R1 for the first UE 200A is semi-statically allocated through RRC signalling (namely, configured grant). In other words, the base station 100 may add configuration information for the configured grant to the RRC message described above or below and transmit the RRC message to the first UE 200A. In this case, at least one of the SL resources R1 allocated by the base station 100 to the first UE 200A in the configured grant is canceled by SL cancellation information.

When data with high priority is generated in the second UE 200B, the second UE 200B transmits a scheduling request to the base station 100. In the example of FIG. 6, the second UE 200B transmits a scheduling request for SL communication to the base station 100 at time t2 via PUCCH or PUSCH.

The base station 100 determines to allocate at least a part of the SL resource R1 that has been allocated to the first UE 200A to the SL transmission by the second UE 200B. The base station 100 transmits, to the first UE 200A via PDCCH, control information (SL cancellation information) for canceling the SL transmission using the SL resource R1 that has been already allocated to the first UE 200A. In the example of FIG. 6, at time t3, the base station 100 transmits the SL cancellation information (cancellation) to the first UE 200A via the PDCCH.

The first UE 200A monitors a candidate for the PDCCH including the SL cancellation information (hereinafter, also referred to as PDCCH candidate) to receive the PDCCH at time t3. For example, the first UE 200A monitors, as PDCCH candidate, PDCCH which is transmitted at time t3 after the lapse of a predetermined period T since the PDCCH has been received at time t1. Note that, here, the PDCCH candidate is transmitted after the lapse of the predetermined period T since the PDCCH has been received at time t1, but the present invention is not limited thereto. The PDCCH candidate may be included in a predetermined resource described later. The first UE 200A monitors in the predetermined resource described later to receive the PDCCH candidate.

The first UE 200A cancels the SL transmission using the SL resource R1 based on the SL cancellation information (cancellation) received at time t3.

At time t4, the base station 100 transmits PDCCH for SL scheduling to the second UE 200B. A predetermined SL resource R3 is allocated (scheduled) based on DCI included in the PDCCH. At this time, at least a part of the SL resource R3 allocated to the second UE 200B includes (overlaps with) at least a part of the canceled SL resource R1.

At time t5, the second UE 200B performs SL transmission using the allocated SL resource R3.

### [SL cancellation information]

The SL cancellation information in the above-described notification method may have at least one piece of the following information.
· Control information included in the SL cancellation information (DCI)
· Information regarding PDCCH via which the SL cancellation information is transmitted

### (Control information included in SL cancellation information)

The control information included in the SL cancellation information includes, for example, information regarding the SL resource R1 (time resource and/or frequency resource) to be canceled.

This allows the first UE 200A to explicitly grasp the SL resource R1 to be canceled. For example, the information regarding the SL resource R1 may include at least one piece of information such as a slot number, a subframe number, a symbol number, a resource number, a resource block number, a subchannel number, and a resource pool number (resource pool ID). Additionally or alternatively, the information regarding the SL resource R1 may include information indicating the start position of the SL resource R1 to be canceled and information indicating the number of SL resources R1 to be canceled (the number of resources from the start position). The information indicating the start position of the SL resource R1 to be canceled and the information indicating the number of SL resources R1 to be canceled (the number of resources from the start position) may be a combination of at least one piece of information such as a slot number, a subframe number, a symbol number, a resource number, a resource block number, a subchannel number, and a resource pool number (resource pool ID) and at least one of the number of slots, the number of subframes, the number of symbols, the number of resources, the number of resource blocks, the number of subchannels, and the number of resource pools (resource pool ID).

The control information included in the SL cancellation information includes, for example, information regarding the SL resource R1 to be canceled, that is, information regarding PDCCH in which the SL resource R1 to be canceled is scheduled (hereinafter, also referred to as first PDCCH). The first PDCCH is, for example, the PDCCH transmitted from the base station 100 to the first UE 200A at time t1 in FIG. 6 to notify the SL scheduling information.

This allows the first UE 200A to recognize the first PDCCH and to grasp that the SL resource R1 scheduled by the first PDCCH is to be canceled. For example, information regarding the first PDCCH may include information indicating a resource on which the first PDCCH is transmitted. The information may include, for example, at least one piece of information such as a slot number, a subframe number, a control resource set (CORESET) number, and a control channel element (CCE) number. Further, for example, the information can be the smallest CCE number among one or more CCEs constituting the first PDCCH.

The control information included in the SL cancellation information includes, for example, information regarding SL communication scheduled in the SL resource R1 to be canceled. That is, the control information included in the SL cancellation information includes information regarding PSCCH and/or PSSCH scheduled in the SL resource R1 to be canceled. This allows the first UE 200A to recognize the PSCCH and/or PSSCH to be canceled and grasp the SL resource R1 to be canceled. The information regarding PSCCH and/or PSSCH scheduled in the SL resource R1 to be canceled may include, for example, a HARQ process number transmitted via the PSSCH.

### (Information regarding PDCCH via which SL cancellation information is transmitted)

The information regarding PDCCH via which SL cancellation information is transmitted (hereinafter, also referred to as second PDCCH) includes, for example, information regarding a resource on which the second PDCCH is to be transmitted. The resource on which the second PDCCH is to be transmitted may be one resource or a plurality of resources.

In a case where the resource on which the second PDCCH is to be transmitted is a plurality of resources, the second PDCCH is transmitted on any of the plurality of resources. That is, the resources are candidates for the resource on which the second PDCCH is to be transmitted (hereinafter, also referred to as a second PDCCH candidate). The first UE 200A monitors the second PDCCH candidate and detects the second PDCCH. In other words, the resource on which the second PDCCH can be transmitted (second PDCCH candidate) can be regarded as a space in which to search for the second PDCCH.

Here, the resource on which the second PDCCH is to be transmitted (hereinafter, also referred to as a second resource) can be determined based on any of the following determination methods.

Determination method 1: Method of determining the second resource based on the first PDCCH.

Determination method 2: Method of determining the second resource based on the SL resource R1 to be canceled.

Determination method 3: Method in which determination method 1 and determination method 2 are combined.

### (Determination method 1)

In a case where the second resource is determined based on the first PDCCH, a time resource of the second resource is determined based on, for example, a time resource of the first PDCCH in which the SL resource R1 to be canceled is scheduled. For example, the slot number (or subframe number, symbol number) of the second resource is determined based on the slot number (or subframe number, symbol number) of the first PDCCH. The slot number (or subframe number, symbol number) of the second resource also includes a possible range of the slot number (or subframe number, symbol number) of the second resource.

For example, the second resource is a slot (or subframe, symbol) a predetermined number (for example, the period T in FIG. 6) of slots (or subframe, symbol) after a slot of the first PDCCH in which the SL resource R1 to be canceled is scheduled.

In addition, for example, the possible range of the slot number (or subframe number, symbol number) of the second resource is predetermined number of slots (or subframe, symbol) after the slot number (or subframe number, symbol number) of the first PDCCH in which the SL resource R1 to be canceled is scheduled.

In other words, the first UE 200A supposes (e.g., expects or assumes) that the second resource is not in a slot before the predetermined number of slot numbers (or subframe number, symbol number) of the first PDCCH in which the SL resource R1 to be canceled is scheduled.

Note that the predetermined number may be defined or set in advance, or may be set from the base station 100 (for example, may be set by RRC signaling described above or below).

In a case where the second resource is determined based on the first PDCCH, for example, a control resource set number of the second resource is the same as a control resource set number of the first PDCCH in which the SL resource R1 to be canceled is scheduled.

### (Determination method 2)

In a case where the second resource is determined based on the SL resource R1 to be canceled, for example, a time resource of the second resource is determined based on a time resource of the SL resource R1 to be canceled. For example, the slot number (or subframe number, symbol number) of the second resource is determined based on the slot number (or subframe number, symbol number) of the SL resource R1 to be canceled. The slot number (or subframe number, symbol number) of the second resource also includes a possible range of the slot number (or subframe number, symbol number) of the second resource.

For example, the second resource is a slot (or subframe, symbol) that is a predetermined number of slots before the slot number (or subframe number, symbol number) of the SL resource R1 to be canceled.

FIG. 7 is a diagram illustrating another example of signaling performed in the communication system 1 according to the embodiment of the present disclosure. Note that description of the same signaling as that in FIG. 6 is omitted. As illustrated in FIG. 7, for example, the base station 100 transmits the second PDCCH to the first UE 200A at time t3 which is a predetermined period T2 before the start time t8 of the SL resource R1. In this way, the second resource on which the second PDCCH is transmitted is a slot (or subframe, symbol) a predetermined number of slots (for example, a predetermined period T2) before the slot number (or subframe number, symbol number) of the SL resource R1 to be canceled.

In addition, for example, a possible range of the slot number (or subframe number, symbol number) of the second resource is a slot (or subframe, symbol) a predetermined number before the slot number (or subframe number, symbol number) of the SL resource R1 to be canceled.

In other words, the first UE 200A supposes (e.g., expects, or assumes) that the second resource is not between a slot (or subframe, symbol) a predetermined number before the slot number (or subframe number, symbol number) of the SL resource R1 to be canceled and the slot (or subframe, symbol) of the SL resource R1.

Note that the predetermined number may be defined or set in advance, or may be set from the base station 100 (for example, may be set by RRC signaling described above or below).

In a case where the second resource is determined based on the SL resource R1 to be canceled, for example, the determination is made based on a subchannel number (or, resource number, resource block number, a resource pool number) of the SL resource R1 to be canceled.
Specifically, a subchannel (or resource, resource block, or resource pool) of the second resource is the same as a subchannel (or resource, resource block, or resource pool) of the SL resource R1 to be canceled.

### (Determination method 3)

In the case of combining the determination method 1 and the determination method 2, for example, the second resource is determined based on the first PDCCH in which the SL resource R1 to be canceled is scheduled and the SL resource R1 to be canceled.

### (RNTI)

Next, information regarding the second PDCCH includes, for example, information regarding a radio network temporary identifier (RNTI) used for the second PDCCH. Here, the RNTI is information used for scrambling the PDCCH and used by the terminal device 200 (hereinafter, also referred to as a UE 200) to identify whether it is the PDCCH addressed to the subject device.

For example, the RNTI used for the second PDCCH is the same RNTI as that used for the first PDCCH in which the SL resource R1 to be canceled is scheduled.

Alternatively, the RNTI used for the second PDCCH may be uniquely defined or set to notify the SL cancellation information. That is, the RNTI used for the second PDCCH is uniquely used to transmit the SL cancellation information. In this case, the RNTI used for the second PDCCH is different from the RNTI used for the first PDCCH in which the SL resource R1 to be canceled is scheduled.

### <3.1.2. Notification method 2 by base station>

In the above-described notification method 1 by the base station 100, the second PDCCH in which the SL cancellation information is transmitted notifies the control information for canceling the SL resource R1, but the present invention is not limited thereto.

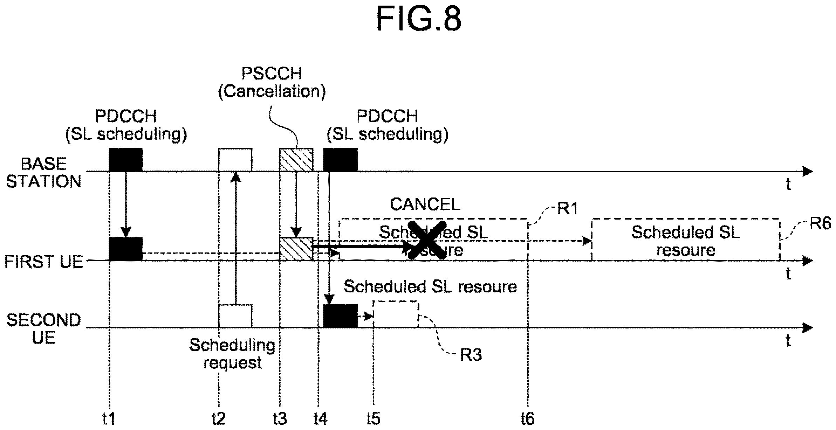

FIG. 8 is a diagram illustrating another example of signaling performed in the communication system 1 according to the embodiment of the present disclosure. Note that description of the same signaling as that in FIG. 6 is omitted. As illustrated in FIG. 8, the base station 100 newly schedules an SL resource R6 different from the SL resource R1 already scheduled by using the second PDCCH. That is, SL cancellation information of this notification method includes information for changing the SL resource R1 to the SL resource R6.

As a result, the first SL resource R1 is implicitly canceled. In other words, scheduling information for PSCCH and/or PSSCH already scheduled is updated (changed) (or overridden). The first UE 200A performs SL communication using the SL resource R6 that has been changed based on the SL cancellation information.

Therefore, the SL cancellation information in the notification method 2 by the base station 100 is mainly different from that in the notification method 1 by the base station 100 in control information included in the SL cancellation information (DCI). The control information included in the SL cancellation information according to the notification method 2 by the base station 100 includes at least one piece of the following information.
· Information indicating PSCCH and/or PSSCH to be updated
· Information indicating that the SL resource R1 already scheduled is to be canceled or updated
· Information indicating the SL resource R6 to be updated

The information indicating PSCCH and/or PSSCH to be updated includes, for example, a HARQ process number transmitted via the PSSCH.

Further, the information indicating the SL resource R6 to be updated includes at least one piece of information such as a slot number, a subframe number, a symbol number, a resource block number, a subchannel number, and a resource pool number. Additionally or alternatively, the information indicating the SL resource R6 may include information indicating the start position of the SL resource R6 to be updated and information indicating the number of SL resources R6 to be updated (the number of resources from the start position). The information indicating the start position of the SL resource R6 to be updated and the information indicating the number of SL resources R6 to be updated (the number of resources from the start position) may be a combination of at least one piece of information such as a slot number, a subframe number, a symbol number, a resource number, a resource block number, a subchannel number, and a resource pool number (resource pool ID) and at least one of the number of slots, the number of subframes, the number of symbols, the number of resources, the number of resource blocks, the number of subchannels, and the number of resource pools (resource pool IDs).

In a case where the information indicating the SL resource R6 to be updated is a predetermined value, it is possible that the new SL resource R6 is not allocated. In this case, the new SL resource R6 is not allocated, and the SL resource R1 is simply canceled.

### <3.1.3. Notification method 3 by base station>

In the notification method 3 by the base station 100, the base station 100 transmits SL cancellation information in group common including the first UE 200A. Hereinafter, a case is described in which the SL cancellation information is transmitted to a predetermined UE group in group common will be described, but broadcast transmission may be performed to an unspecified UE 200.

This method is the same as the notification method 1 by the base station 100 except that the base station 100 transmits the SL cancellation information in group common. The notification method 3 by the base station 100 is different from the notification method 1 by the base station 100 mainly in that the second PDCCH including the SL cancellation information is a group common PDCCH and the SL cancellation information is group common DCI.

### (Control information included in SL cancellation information)

In the notification method 3 by the base station 100, control information included in the SL cancellation information (DCI) includes information indicating an SL resource to be canceled. The SL resource to be canceled is, for example, a resource corresponding to the SL resource overlapping with the SL resource R3 of the SL resource R1 in FIG. 6. Hereinafter, the SL resource to be canceled is also referred to as an SL resource R7. FIG. 6 illustrates a case where the SL resource R7 to be canceled and the SL resource R3 are the same SL resource, but the present invention is not limited thereto. It is only required that the SL resource R3 is scheduled by using at least a part of the SL resource R7, and the SL resource R3 and the SL resource R7 do not need to be the same resource. In a case where the SL resource R3 and the SL resource R7 are not the same resource, it is preferable that the SL resource R7 is the SL resource including the SL resource R3 (the SL resource R3 is a part of the SL resource R7).

The first UE 200A cancels the SL resource R1 in a case where the SL resource R1 already allocated is included in (overlaps with) at least a part of the SL resource R7 to be canceled indicated in the control information. Specifically, the first UE 200A performs a cancellation process of PSCCH and/or PSSCH planned to be transmitted on the SL resource R1.

As an example of the cancellation process, all of the PSCCH and/or PSSCH are canceled.

As another example of the cancellation process, in the SL resource R1, the SL resource overlapping with the SL resource R7 is canceled. In this case, the first UE 200A transmits the PSCCH and/or PSSCH using the remaining SL resources that are not canceled (that is, do not overlap with the SL resource R7).

The SL resource R7 to be canceled described above can be specified, defined, or limited by some or all of the following.

The SL resource R7 is a resource in a predetermined resource pool. For example, the predetermined resource pool is set as a reception resource pool (RxPool) or a transmission resource pool (TxPool). In addition, the control information may include a resource pool ID indicating the predetermined resource pool.

The time resource of the SL resource R7 excludes a symbol that is not configured at least by the time resource (sl-timeResource) of the resource pool and/or a symbol of an SL resource that is not indicated in the TDD configuration (sl-TDD-Configuration) configured in the resource pool.

Next, examples of a method of indicating the SL resource R7 to be canceled include a method of indicating the SL resource R7 as information in a bitmap format and a method of indicating the SL resource R7 as information regarding the SL resource R7 to be canceled.

In the case of indicating the SL resource R7 as information in a bitmap format, each bit included in the information corresponds to, for example, a part in a predetermined SL resource. For example, if the bit is "1", it indicates that the SL resource (or SL transmission in which at least a part of the SL resource overlaps) corresponding to the bit is to be canceled.

Here, the SL resource corresponding to each bit is defined or set with a predetermined number of symbols and/or a predetermined number of subchannels.

Alternatively, the SL resource corresponding to each bit may be determined based on a parameter that is set to a resource pool of an SL resource that can be further canceled. Examples of the parameter include a sub-channel size (that is, the number of resource blocks constituting one subchannel) of the resource pool, the number of subchannels of the resource pool, and a time resource of the resource pool.

In order to determine the SL resource corresponding to each bit, the following parameters may be set by the base station 100 by RRC signalling.
· Parameters related to the number of bits of control information included in SL cancellation information
· Parameters related to frequency resource of SL resource corresponding to each bit
· Parameters related to the number of symbols corresponding to the entire SL resource notified in the control information
· Parameters related to the number of symbols corresponding to each bit

Note that the parameters related to frequency resource of SL resource corresponding to each bit can be set in units of the subchannel size of the resource pool described above.

Further, the number of symbols corresponding to the entire SL resource is the number of symbols excluding a symbol that is not configured at least by the time resource (sl-timeResource) of the resource pool and/or a symbol of an SL resource that is not indicated in the TDD configuration (sl-TDD-Configuration) configured in the resource pool.

Further, a predetermined number of symbols can be set as the parameters related to the number of symbols corresponding to each bit.

Next, as described above, examples of the method of indicating the SL resource R7 to be canceled include a method of indicating the SL resource R7 as information regarding the SL resource R7 to be canceled. In this case, the information may include, for example, at least one piece of information regarding a slot number, a subframe number, a symbol number, a resource block number, a subchannel number, and a resource pool number. Additionally or alternatively, the information regarding the SL resource R7 may include information indicating the start position of the SL resource R7 and information indicating the number of SL resources R7 (the number of resources from the start position). The information indicating the start position of the SL resource R7 and the information indicating the number of SL resources R7 (the number of resources from the start position) may be a combination of at least one piece of information such as a slot number, a subframe number, a symbol number, a resource number, a resource block number, a subchannel number, and a resource pool number (resource pool ID) and at least one of the number of slots, the number of subframes, the number of symbols, the number of resources, the number of resource blocks, the number of subchannels, and the number of resource pools (resource pool ID).

### (Information regarding PDCCH via which SL cancellation information is transmitted)

The second PDCCH in which the SL cancellation information is transmitted is transmitted on a periodic resource defined or set in advance. The first UE 200A monitors the periodic resource. This allows the first UE 200A to acquire the SL cancellation information. The UE 200 for which the SL resource R1 is not scheduled does not need to monitor the second PDCCH transmitted on the periodic resource.

In a case where there is no SL resource R1 to be canceled, the second PDCCH does not need to be transmitted.

Next, the RNTI used for the second PDCCH is uniquely defined or set to notify the SL cancellation information. In this case, the RNTI used for the second PDCCH is different from the RNTI used for the PDCCH in which the SL resource R1 to be canceled is scheduled.

### <3.2. Method of notification by second UE>

### <3.2.1. Notification method 1 by second UE>

Next, another example of a method of notifying SL cancellation information performed in the communication system 1 according to the embodiment of the present disclosure will be described. Here, it is assumed that the second UE 200B transmits SL cancellation information to the first UE 200A.

### [Signaling]

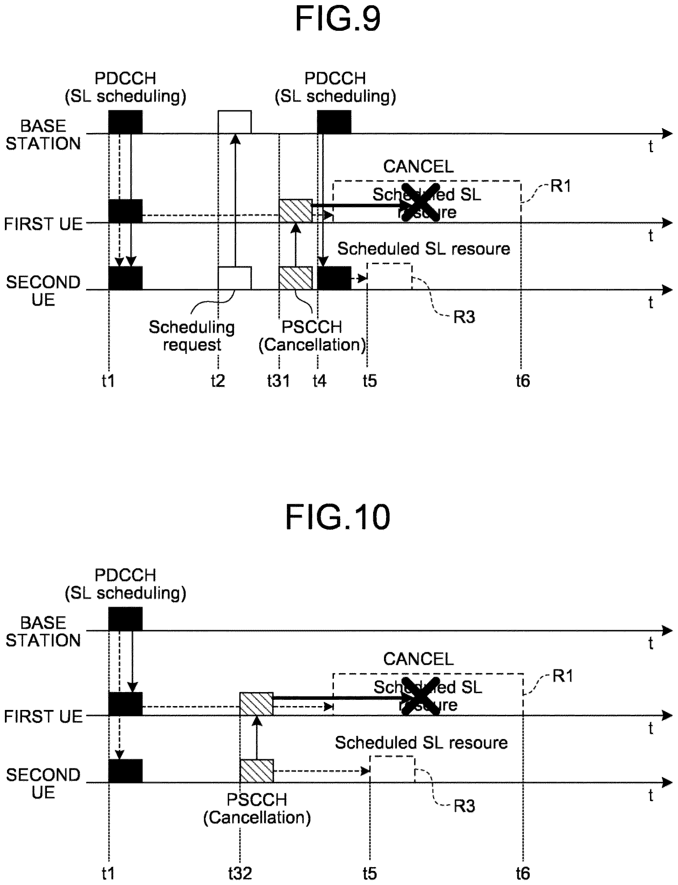

FIG. 9 is a diagram illustrating an example of signaling performed in the communication system 1 according to the embodiment of the present disclosure. Note that description of the same signaling as that in FIG. 6 is omitted. That is, unless otherwise specified, the notification method by the base station 100 can be applied as the notification method 1 by the second UE 200B.

As illustrated in FIG. 9, at time t1, the base station 100 transmits first PDCCH for SL scheduling to the first UE 200A. The first UE 200A receives the first PDCCH. In this notification method, the second UE 200B receives the first PDCCH, too. This allows the second UE 200B to grasp the scheduling status of the SL resource R1.

As described above, in this notification method, in the SL mode-1, the second UE 200B receives scheduling information (first PDCCH) of another TxUE (here, the first UE 200A) for the purpose of grasping the scheduling status of an SL resource.

In other words, in the SL mode-1, the second UE 200B monitors the first PDCCH addressed to another TxUE (for example, first UE 200A) from the base station 100 to sense the use state of the SL resource. This allows the second UE 200B to recognize the SL resource. Note that the number of other TxUEs to which the first PDCCH, monitored by the second UE 200B, is addressed is not limited to one. The second UE 200B can monitor the first PDCCHs addressed to a plurality of other TxUEs.

In order to sense the first PDCCH addressed to another TxUE, the second UE 200B knows in advance the RNTI used for the first PDCCH. For example, the RNTI is defined or set in advance.

As illustrated in FIG. 9, at time t2 before the start of the SL resource R1 allocated to the first UE 200A, the second UE 200B transmits, to the base station 100, a scheduling request for SL using the PUCCH or the PUSCH.

At this time, the second UE 200B may notify, together with the scheduling request, the base station 100 that SL cancellation information to be described later is to be transmitted to the first UE 200A. This allows the base station 100 to recognize that the SL resource R1 allocated to the first UE 200A is to be canceled.

Subsequently, at time t31, the second UE 200B transmits, to the first UE 200A, control information for canceling the SL resource R1 (SL cancellation information) using the PSCCH and/or PSSCH. Note that FIG. 9 illustrates an example in which the second UE 200B transmits the control information (SL cancellation information, described as Cancellation in FIG. 9) using the PSCCH.

Although FIG. 9 illustrates an example in which the control information for canceling the SL resource R1 is transmitted after the scheduling request, the present invention is not limited thereto. The control information may be transmitted at the same time as the scheduling request (in the same slot or the same symbol). Alternatively, the control information may be transmitted prior to the scheduling request.

The first UE 200A monitors candidates for the PSCCH and/or PSSCH including the SL cancellation information, and receives the PSCCH and/or PSSCH. The candidates for the PSCCH and/or PSSCH may be included in a predetermined resource described later. The first UE 200A monitors in the predetermined resource to receive the PSCCH and/or PSSCH.

The first UE 200A cancels the SL transmission using the SL resource R1 based on the received SL cancellation information.

The base station 100 determines to allocate at least a part of the SL resource R1 that has been allocated to the first UE 200A to an SL resource R3 for SL transmission by the second UE 200B.

At time t4, the base station 100 transmits second PDCCH for SL scheduling to the second UE 200B. At this time, at least a part of the SL resource R3 allocated to the second UE 200B includes at least a part of the canceled SL resource R1.

At time t5, the second UE 200B performs SL transmission using the allocated SL resource R3.

### [SL cancellation information]

The SL cancellation information in the above-described notification method 1 by the second UE 200B has at least one piece of the following information.
· Control information included in SL cancellation information (sidelink control information (SCI))
· Information regarding PSCCH and/or PSSCH via which SL cancellation information is transmitted

The control information included in SL cancellation information (SCI) includes, for example, the same information as the control information included in the SL cancellation information (DCI) described in the notification method 1 by the base station 100.

The information regarding PSCCH and/or PSSCH via which SL cancellation information is transmitted includes, for example, information regarding a resource on which the PSCCH and/or PSSCH is transmitted. The resource is, for example, the same as the resource on which the second PDCCH is transmitted described in the notification method 1 by the base station 100.

Further, the resource on which the PSCCH and/or PSSCH is transmitted may be a resource in the same resource pool as that of the SL resource R1 to be canceled.

Here, the PSCCH and/or PSSCH is unicast individually for the first UE 200A. In this case, the SL cancellation information preferably includes information explicitly indicating the SL resource R1 or SL communication to be canceled (that is, the SL resource R1 or the SL communication scheduled for the first UE 200A).

Alternatively, it is possible to broadcast or groupcast the PSCCH and/or PSSCH to a plurality of UEs 200 including the first UE 200A. In this case, the SL cancellation information preferably includes information indicating the SL resource R1 that the second UE 200B desires to cancel. For example, the SL cancellation information preferably includes the same control information as the control information included in the SL cancellation information (DCI) in the communication method 3 by the base station 100.

### <3.2.2. Notification method 2 by second UE>

Here, similarly to the notification method 1 by the second UE 200B, a method in which the second UE 200B transmits SL cancellation information to the first UE 200A will be described as the notification method 2 by the second UE 200B. This notification method is different from the notification method 1 by the second UE 200B in that the SL cancellation information transmitted by the second UE 200B is reservation information for an SL resource including at least a part of the SL resource R1 allocated to the first UE 200A.

FIG. 10 is a diagram illustrating an example of signaling performed in the communication system 1 according to the embodiment of the present disclosure. Note that description of the same signaling as those in FIGS. 6 and 9 is omitted. That is, unless otherwise specified, the notification method by the base station 100 and/or the notification method 1 by the second UE 200B can be applied as the notification method 2 by the second UE 200B.

As illustrated in FIG. 10, at time t32, the second UE 200B transmits, to the first UE 200A, control information for canceling the SL resource R1 (SL cancellation information) using PSCCH and/or PSSCH. Note that FIG. 10 illustrates an example in which the second UE 200B transmits the control information (SL cancellation information, described as Cancellation in FIG. 10) using the PSCCH.

As described above, in this notification method, the second UE 200B can transmit the SL cancellation information to the first UE 200A without transmitting a scheduling request to the base station 100.

Here, the SL cancellation information according to this notification method includes reservation information for an SL resource R3 including at least a part of the SL resource R1 allocated to the first UE 200A. Further, the SL cancellation information also includes priority information for the PSSCH transmitted by the second UE 200B. The priority is higher than the priority for the PSSCH scheduled to be transmitted by the first UE 200.

The priority information for determining whether the second UE 200B cancels the SL transmission by the first UE 200A (that is, the priority information used in the SL preemption in Mode-1) can be set independently of the priority information used in the SL preemption in Mode-2 described above.

Further, a threshold value (threshold) of the priority at which the second UE 200B can cancel the SL transmission by the first UE 200A can be set in a resource pool. The resource pool is a resource pool for the SL resource R1 allocated to the first UE 200A. In a case where the threshold value is set in the resource pool, the second UE 200B can cancel the SL transmission by the first UE 200A on condition that the priority of the SL transmission desired to be transmitted exceeds (or greater than or equal to) the threshold value.

As illustrated in FIG. 10, the first UE 200A receives the PSCCH that is the PSCCH transmitted at time t32 and includes the SL cancellation information (Cancellation). The first UE 200A monitors candidates for the PSCCH and/or PSSCH including the SL cancellation information, and receives the PSCCH and/or PSSCH (PSCCH in FIG. 10) .

The candidates for the PSCCH and/or PSSCH may be included in a predetermined resource similar to the notification method 1 by the second UE 200B. The first UE 200A monitors the predetermined resource.

The first UE 200A cancels the SL transmission using the SL resource R1 based on the received SL cancellation information.

At time t5, the second UE 200B performs SL transmission using the SL resource R3.

### <3.3. Method of notification to third UE>

### <3.3.1. Notification method 1 to third UE>

Next, another example of a method of notifying SL cancellation information performed in the communication system 1 according to the embodiment of the present disclosure will be described. Here, it is assumed that the base station 100 transmits information for canceling an SL resource to a third UE 200C (an example of the first communication device or the second communication device). The base station 100 notifies the third UE 200C of the information for canceling an SL resource via the first UE 200A. The base station 100 transmits the SL cancellation information to the first UE 200A, so that the first UE 200A causes the third UE 200C to cancel SL communication using the SL resource.

Here, the third UE 200C is an RxUE that receives the SL transmission from the first UE 200A. The third UE 200C transmits, to the first UE 200A, response information corresponding to PSSCH transmitted from the first UE 200A using a physical sidelink feedback channel (PSFCH). The response information includes, for example, Ack/Nack information, A/N information, and HARQ-ACK.

In this notification method, the base station 100 causes PSFCH, which is a sidelink channel for transmitting the response information corresponding to the PSSCH, to be cancelled by using the SL cancellation information. The base station 100 notifies the third UE 200C of the information for canceling the PSFCH via the first UE 200A. The base station 100 transmits the SL cancellation information to the first UE 200A, so that the first UE 200A causes the third UE 200C to cancel the PSFCH transmission.

In this notification method, description of the same method as the notification method by the base station 100 and the notification method by the second UE 200B described above will be omitted. That is, this notification method can be performed by combining the notification method by the base station 100 and the notification method by the second UE 200B described above (that is, using a similar method).

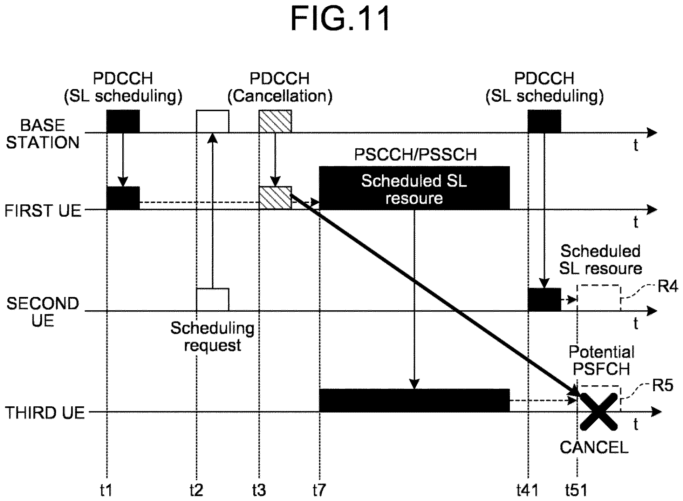

FIG. 11 is a diagram illustrating an example of signaling performed in the communication system 1 according to the embodiment of the present disclosure. Note that description of the same signaling as those in FIGS. 6 and 9 is omitted. That is, unless otherwise specified, the notification method by the base station 100 and/or the notification method by the second UE 200B can be applied as the notification method 1 to the third UE 200C.

Here, it is assumed that the first UE 200A transmits PSSCH to the third UE 200C and the third UE 200C tries to transmit PSFCH including the response information using an SL resource R5 (Potential PSFCH).

The scheduling of the PSSCH transmitted from the first UE 200A to the third UE 200C is performed by the base station 100 as in FIGS. 6 and 9. That is, in the example of FIG. 11, the SL resource R1 is not canceled, and the first UE 200A transmits PSSCH to the third UE 200C by using the SL resource R1 allocated by the first PDCCH.

Here, as illustrated in FIG. 11, the base station 100 that has received a scheduling request from the second UE 200B at time t2 transmits PDCCH including SL cancellation information (Cancellation) to the first UE 200A at time t3. The SL cancellation information is control information for canceling the PSFCH corresponding to the PSSCH transmitted by the first UE 200A.

The first UE 200A transmits PSCCH and the PSSCH to the third UE 200C using an SL resource R3 at time t7 based on the SL scheduling information received at time t1 and the SL cancellation information received at time t3.

At this time, the SCI transmitted via the PSCCH or PSSCH includes information indicating that the PSFCH corresponding to the PSSCH is not transmitted. The information indicating that the PSFCH is not transmitted may include, for example, information indicating that HARQ-ACK transmission is disabled, information indicating HARQ-ACK cancellation, and information indicating HARQ-ACK stop.

The third UE 200C performs a process for receiving the PSSCH based on the SCI transmitted via the PSCCH or PSSCH. The third UE 200C cancels the PSFCH transmission without transmitting the HARQ-ACK corresponding to the PSSCH.

In the example of FIG. 11, at time t41 after the transmission of the PSCCH and the PSSCH by the first UE 200A, the base station 100 transmits PDCCH including SL scheduling information for scheduling an SL resource R4 to the second UE 200B. At time t51, the second UE 200B performs SL transmission using the allocated SL resource R4 based on the SL scheduling information. The SL resource R4 includes (overlaps with) at least a part of the SL resource R5 allocated for the PSFCH transmission.

### <3.3.2. Notification method 2 to third UE>

In the notification method 1 to the third UE 200C described above, the base station 100 transmits the PDCCH including the SL cancellation information to the first UE 200A before the first UE 200A transmits the PSCCH and the PSSCH, but the present invention is not limited thereto.

It is possible that, after the first UE 200A transmits the PSCCH and the PSSCH, the base station 100 transmits PDCCH including the SL cancellation information. In this case, the base station 100 transmits the PDCCH including the SL cancellation information (Cancellation) to the third UE 200C.

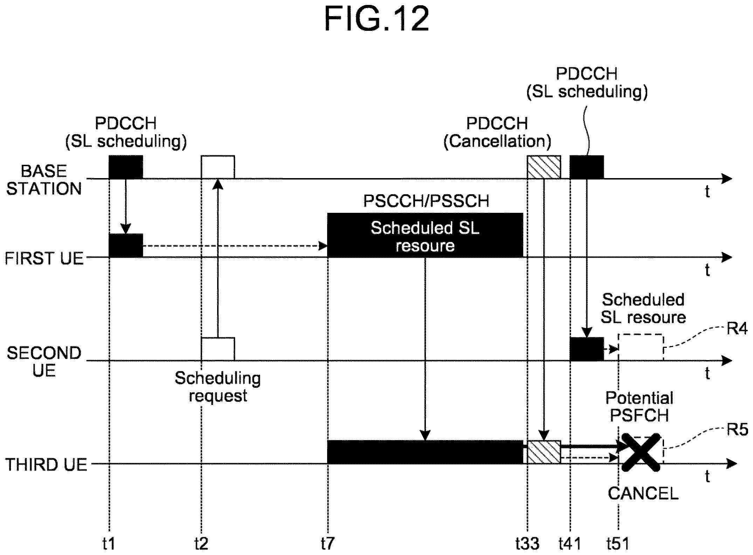

FIG. 12 is a diagram illustrating an example of signaling performed in the communication system 1 according to the embodiment of the present disclosure. Note that description of the same signaling as that in FIG. 12 is omitted. That is, unless otherwise specified, the notification method 1 to the third UE 200C, the notification method by the base station 100 and/or the notification method by the second UE 200B can be applied as the notification method 2 to the third UE 200C.

As illustrated in FIG. 12, in this notification method, PDCCH including SL cancellation information (Cancellation) is transmitted from the base station 100 to the third UE 200C at time t33 after the first UE 200A transmits PSCCH and PSSCH. The SL cancellation information is control information for canceling the PSFCH corresponding to the PSSCH transmitted by the first UE 200A.

In addition, in the notification method 2 to the third UE, as described in <3.1.3. Notification method 3 by base station>, the SL cancellation information may include an SL resource R7 to be canceled and may be transmitted in group common or broadcast. In a case where the SL resource R7 indicated in the received SL cancellation information includes at least a part of an SL resource R5 of PSFCH that can be transmitted, the third UE 200C cancels the transmission of the PSFCH. The base station 100 can schedule an SL resource R4 for the second UE 200B using at least a part of the canceled SL resource R7. Note that the SL resource R4 and the SL resource R7 may or may not be the same. In a case where the SL resource R4 and the SL resource R7 are not the same SL resource, it is preferable that the SL resource R7 is the SL resource including the SL resource R4 (the SL resource R4 is a part of the SL resource R7).

The third UE 200C cancels the PSFCH transmission without transmitting a HARQ-ACK for the PSSCH based on the SL cancellation information.

### <<4. Other embodiments>>

The above-described embodiments are examples, and various modifications and applications are possible.

For example, a control device for controlling the base station 100 and the terminal device 200 of the embodiments may be implemented by a dedicated computer system or by a general-purpose computer system.

For example, a communication program for executing the operation described above is stored in a computer-readable recording medium such as an optical disk, a semiconductor memory, a magnetic tape, or a flexible disk, and distributed. Then, for example, the program is installed into a computer and the processing described above is executed, so that the control device is configured. At this time, the control device may be a device (for example, a personal computer) external to the transmission device and the reception device. Alternatively, the control device may be a device (for example, the control units 150, 240) inside the transmission device and the reception device.

In addition, the communication program may be stored in a disk device included in a server device over a network such as the Internet so that the communication program can be downloaded to a computer. In addition, the functions described above may be implemented by cooperation with an operating system (OS) and application software. In such a case, a portion other than the OS may be stored in a medium and distributed, or a portion other than the OS may be stored in a server device and downloaded to a computer.

Among the processing described in the embodiments, all or a part of the processing, described as automatic processing, can be performed manually, or all or a part of the processing, described as manual processing, can be performed automatically by a known method. In addition, the processing procedures, specific names, and information including various data and parameters indicated in the document and the drawings can be arbitrarily changed unless otherwise specified. For example, various types of information illustrated in the drawings are not limited to the illustrated information.

Further, the constituent elements of the individual devices illustrated in the drawings are functionally conceptual and are not necessarily configured physically as illustrated in the drawings. To be specific, the specific form of distribution and integration of the devices is not limited to the one illustrated in the drawings, and all or a part thereof can be configured by functionally or physically distributing and integrating in arbitrary units according to various loads, usage conditions, and the like. Note that this configuration by distribution and integration may be performed dynamically.

Further, the embodiments described above can be appropriately combined to the extent that the processing contents do not contradict each other. Further, the order of the steps illustrated in the sequence diagrams of the embodiments can be changed as appropriate.

Further, for example, the present embodiment can be implemented as any configuration constituting a device or a system, for example, a processor as a system large scale integration (LSI) or the like, a module using a plurality of processors or the like, a unit using a plurality of modules or the like, a set obtained by further adding other functions to a unit, or the like (that is, a configuration of a part of the device).

In the present embodiment, the system means a set of a plurality of constituent elements (devices, modules (parts), etc.), and it does not matter whether or not all the constituent elements are in an identical housing. Therefore, a plurality of devices housed in separate housings and connected via a network and one device in which a plurality of modules is housed in one housing are both systems.

Further, for example, the present embodiment can adopt a configuration of cloud computing in which one function is shared and processed by a plurality of devices in cooperation via a network.

### <<5. Conclusion>>

Although the embodiments of the present disclosure have been described above, the technical scope of the present disclosure is not limited to the embodiments described above as it is, and various modifications can be made without departing from the gist of the present disclosure. In addition, constituent elements of different embodiments and modification examples may be appropriately combined.

Further, the effects of the embodiments described in the present specification are merely examples and are not limited, and other effects may be provided.

The present technology may also be configured as below.
(1) A communication device comprising:
   a communication unit that receives, from a base station, scheduling information related to a sidelink resource used for sidelink communication with another communication device; and
   a control unit that performs the sidelink communication with the another communication device by using the sidelink resource, wherein
   the control unit
   cancels, in a case where cancellation information for canceling a use of the sidelink resource is received, the sidelink communication using the sidelink resource based on the cancellation information.
(2) The communication device according to (1), wherein a resource on which the cancellation information is transmitted is determined based on at least one of the scheduling information and the sidelink resource.
(3) The communication device according to (1) or (2), wherein a time resource of a resource on which the cancellation information is transmitted is determined based on at least one of a time resource for the scheduling information and a time resource for the sidelink resource.
(4) The communication device according to any one of (1) to (3), wherein the cancellation information includes at least one piece of information regarding the sidelink resource, information regarding the scheduling information, and information regarding the sidelink communication scheduled in the sidelink resource.
(5) The communication device according to any one of (1) to (4), wherein a radio network temporary identifier (RNTI) used for transmission of the cancellation information is one of an RNTI used for transmission of the scheduling information and an RNTI uniquely used for transmission of the cancellation information.
(6) The communication device according to any one of (1) to (4), wherein the cancellation information is transmitted from the base station by using a physical downlink control channel (PDCCH).
(7) The communication device according to (6), wherein
   the cancellation information includes information for changing the sidelink resource, and
   the control unit performs the sidelink communication with the another communication device by using the sidelink resource changed based on the cancellation information.
(8) The communication device according to any one of (1) to (5), wherein the cancellation information is transmitted from a second communication device by using a physical sidelink control channel (PSCCH).
(9) The communication device according to (8), wherein
   the cancellation information includes at least one piece of information for reserving a second sidelink resource used for the sidelink communication by the second communication device and information indicating priority of the sidelink communication transmitted on the second sidelink resource, and
   the priority included in the cancellation information is higher than priority of the sidelink communication transmitted by the communication device on the sidelink resource.
(10) The communication device according to (9), wherein at least a part of the second sidelink resource overlaps with at least a part of the sidelink resource.
(11) A communication device comprising:
   a control unit that transmits, based on scheduling information that is transmitted by a base station and relates to a sidelink resource used for sidelink communication with a first communication device, cancellation information for canceling the sidelink communication using the sidelink resource to a second communication device that performs the sidelink communication with the first communication device.
(12) The communication device according to (11), wherein the communication device is a base station that communicates with the first communication device and the second communication device.
(13) The communication device according to (12), wherein
   the control unit transmits, to a third communication device, second scheduling information related to a second sidelink resource used by the third communication device to perform the sidelink communication with another communication device, and
   at least a part of the second sidelink resource overlaps with at least a part of the sidelink resource.
(14) The communication device according to (12) or (13), wherein the cancellation information includes information for canceling a physical sidelink feedback channel (PSFCH) transmitted in sidelink communication between the first communication device and the second communication device.
(15) The communication device described in (14), in which
   the cancellation information is transmitted to the second communication device that transmits at least one of PSCCH and physical sidelink shared channel (PSSCH) by using the sidelink resource, and
   when transmitting the PSCCH and the PSSCH, the second communication device notifies the first communication device of information for canceling transmission of PSFCH.
(16) The communication device described in (14), in which
   the cancellation information is transmitted to the second communication device that transmits PSFCH in response to PSSCH transmitted by the first communication device by using the sidelink resource, and
   the second communication device cancels transmission of the PSFCH according to the cancellation information.
(17) The communication device according to (11), wherein the communication device is a third communication device that communicates with the base station and performs the sidelink communication with another communication device.
(18) The communication device according to (17), wherein the control unit recognizes the sidelink resource.
(19) The communication device according to (18), wherein the control unit receives the scheduling information, and recognizes the sidelink resource based on the scheduling information.
(20) The communication device according to any one of (17) to (19), wherein the communication device uses a same resource pool as that of the second communication device.
(21) A communication method comprising:
   receiving, from a base station, scheduling information related to a sidelink resource used for sidelink communication with another communication device;
   performing the sidelink communication with the another communication device by using the sidelink resource; and
   canceling, in a case where cancellation information for canceling a use of the sidelink resource is received, the sidelink communication using the sidelink resource based on the cancellation information.
(22) A communication method comprising:
   transmitting, based on scheduling information that is transmitted by a base station and relates to a sidelink resource used for sidelink communication with a first communication device, cancellation information for canceling the sidelink communication using the sidelink resource to a second communication device that performs the sidelink communication with the first communication device.

### Reference Signs List

1 COMMUNICATION SYSTEM
100 BASE STATION
110, 210 ANTENNA UNIT
120, 220 RADIO COMMUNICATION UNIT
130 NETWORK COMMUNICATION UNIT
140, 230 STORAGE UNIT
150, 240 CONTROL UNIT
200 TERMINAL DEVICE

## Claims

1. A communication device comprising:
a communication unit that receives, from a base station, scheduling information related to a sidelink resource used for sidelink communication with another communication device; and
a control unit that performs the sidelink communication with the another communication device by using the sidelink resource, wherein
the control unit
cancels, in a case where cancellation information for canceling a use of the sidelink resource is received, the sidelink communication using the sidelink resource based on the cancellation information.

2. The communication device according to claim 1, wherein a resource on which the cancellation information is transmitted is determined based on at least one of the scheduling information and the sidelink resource.

3. The communication device according to claim 1, wherein a time resource of a resource on which the cancellation information is transmitted is determined based on at least one of a time resource for the scheduling information and a time resource for the sidelink resource.

4. The communication device according to claim 1, wherein the cancellation information includes at least one piece of information regarding the sidelink resource, information regarding the scheduling information, and information regarding the sidelink communication scheduled in the sidelink resource.

5. The communication device according to claim 1, wherein a radio network temporary identifier (RNTI) used for transmission of the cancellation information is one of an RNTI used for transmission of the scheduling information and an RNTI uniquely used for transmission of the cancellation information.

6. The communication device according to claim 1, wherein the cancellation information is transmitted from the base station by using a physical downlink control channel (PDCCH).

7. The communication device according to claim 6, wherein
the cancellation information includes information for changing the sidelink resource, and
the control unit performs the sidelink communication with the another communication device by using the sidelink resource changed based on the cancellation information.

8. The communication device according to claim 1, wherein the cancellation information is transmitted from a second communication device by using a physical sidelink control channel (PSCCH).

9. The communication device according to claim 8, wherein
the cancellation information includes at least one piece of information for reserving a second sidelink resource used for the sidelink communication by the second communication device and information indicating priority of the sidelink communication transmitted on the second sidelink resource, and
the priority included in the cancellation information is higher than priority of the sidelink communication transmitted by the communication device on the sidelink resource.

10. The communication device according to claim 9, wherein at least a part of the second sidelink resource overlaps with at least a part of the sidelink resource.

11. A communication device comprising:
a control unit that transmits, based on scheduling information that is transmitted by a base station and relates to a sidelink resource used for sidelink communication with a first communication device, cancellation information for canceling the sidelink communication using the sidelink resource to a second communication device that performs the sidelink communication with the first communication device.

12. The communication device according to claim 11, wherein the communication device is a base station that communicates with the first communication device and the second communication device.

13. The communication device according to claim 12, wherein
the control unit transmits, to a third communication device, second scheduling information related to a second sidelink resource used by the third communication device to perform the sidelink communication with another communication device, and
at least a part of the second sidelink resource overlaps with at least a part of the sidelink resource.

14. The communication device according to claim 12, wherein the cancellation information includes information for canceling a physical sidelink feedback channel (PSFCH) transmitted in sidelink communication between the first communication device and the second communication device.

15. The communication device according to claim 11, wherein the communication device is a third communication device that communicates with the base station and performs the sidelink communication with another communication device.

16. The communication device according to claim 15, wherein the control unit recognizes the sidelink resource.

17. The communication device according to claim 16, wherein the control unit receives the scheduling information, and recognizes the sidelink resource based on the scheduling information.

18. The communication device according to claim 15, wherein the communication device uses a same resource pool as that of the second communication device.

19. A communication method comprising:
receiving, from a base station, scheduling information related to a sidelink resource used for sidelink communication with another communication device;
performing the sidelink communication with the another communication device by using the sidelink resource; and
canceling, in a case where cancellation information for canceling a use of the sidelink resource is received, the sidelink communication using the sidelink resource based on the cancellation information.

20. A communication method comprising:
transmitting, based on scheduling information that is transmitted by a base station and relates to a sidelink resource used for sidelink communication with a first communication device, cancellation information for canceling the sidelink communication using the sidelink resource to a second communication device that performs the sidelink communication with the first communication device.
